# EUROPÄISCHE PATENTSCHRIFT

(11) **EP 3 350 033 B1**
(45) Veröffentlichungstag und Bekanntmachung des Hinweises auf die Patenterteilung: **27.11.2019**
(21) Anmeldenummer: 16785335.7
(22) Anmeldetag: 30.08.2016
(51) Int. Cl.: B60S 1/56, G02B 27/00, B60S 1/52

(54) **REINIGUNGSVORRICHTUNG ZUM REINIGEN EINER TRANSPARENTEN ABDECKUNG EINER KAMERA**
CLEANING DEVICE FOR CLEANING A TRANSPARENT CAMERA COVER
DISPOSITIF DE NETTOYAGE DESTINÉ À NETTOYER UN CACHE TRANSPARENT D'UNE CAMÉRA

(30) Priorität: 14.09.2015 DE 102015217546
(43) Veröffentlichungstag der Anmeldung: 25.07.2018
(73) Patentinhaber: Conti Temic Microelectronic GmbH, 90411 Nürnberg (DE); Continental Automotive GmbH, 30165 Hannover (DE)
(72) Erfinder: RINGLER, Dirk, 36289 Friedewald-Motzfeld (DE); HAHN, Torsten, 34576 Homberg (DE); SCHAECKEL, Stefan, 36251 Bad Hersfeld (DE); WERNER, Thomas, 36214 Nentershausen (DE); FRÖLICH, Johannes, 89129 Setzingen (DE); LÄSSLE, David, 89129 Langenau (DE)
(74) Vertreter: Bobbert, Christiana
(86) Internationale Anmeldenummer: PCT/DE2016/200407
(87) Internationale Veröffentlichungsnummer: WO 2017/045682

(56) Entgegenhaltungen:
- CN-U- 201 923 085
- DE-A1-102005 045 410
- DE-A1-102010 007 850
- DE-A1-102014 202 072

## Beschreibung

Die Erfindung betrifft eine Reinigungsvorrichtung zum Reinigen einer transparenten Abdeckung einer Kamera.

Bei Kraftfahrzeugen sind heutzutage zunehmend Assistenzsysteme mit entsprechenden Sensoren eingebaut, die den Fahrzeugnutzer beim Fahren des Fahrzeuges unterstützen. Als Assistenzsysteme sind beispielsweise kamerabasierte Systeme zur optischen Überwachung der Fahrzeugumgebung bekannt. Derartige Assistenzsysteme umfassen typischerweise wenigstens eine am Fahrzeugaußenbereich angeordnete Kamera zur optischen Erfassung und Aufnahme der Fahrzeugumgebung. Die Einbauposition der Kameras am Fahrzeug richtet sich hierbei insbesondere nach der bestimmungsgebenden Assistenzfunktion. Beispielsweise sind Kameras für Rückfahrhilfen typischerweise im Bereich des Fahrzeughecks oder im Bereich der Fahrzeugrückscheibe angeordnet. Sogenannte Surround-View Kamerasysteme umfassen neben einer Front- und einer Heckkameras typischerweise zwei weitere Kameras, die meist unterhalb des linken bzw. rechten Außenspiegels angeordnet sind. Die von den Kameras erfassten Bilder sind typischerweise auf einem Display in der Fahrzeugkabine für den Fahrzeugnutzer darstellbar.

Da die Kameras in der Regel im Fahrzeugaußenbereich und an Stellen angeordnet sind, an welchen sie schlecht vor Verschmutzung und äußeren Witterungseinflüssen geschützt sind, sind aus dem Stand der Technik bereits verschiedene Reinigungssysteme bekannt, mit denen die Kameras bei Bedarf gereinigt werden können, insbesondere deren optische Elemente wie Linsen oder Abdeckgläser, um eine möglichst fortwährend freie Sicht auf den zu erfassenden Überwachungsbereich gewährleisten zu können

Aus der Offenlegungsschrift DE 103 02748 A1 ist in dem Zusammenhang eine Vorrichtung zum Reinigen einer optischen Beobachtungseinrichtung an einem Fahrzeug bekannt, insbesondere eines Kameraobjektivs, bestehend aus mindestens einer Spritzdüse, über die die optische Beobachtungseinrichtung bedarfsweise von einem strömenden Medium beaufschlagt wird, wobei die Spritzdüse sowohl von einer Waschflüssigkeit als auch von einer Druckluft durchströmt werden kann.

Die Offenlegungsschrift DE 10 2012 218 583 A1 offenbart ebenfalls eine Vorrichtung zur Reinigung einer Kamera, wobei in diesem Fall ein Gemisch aus Waschwasser und Hochdruckluft verwendet wird, das über eine Hochdruckluftpassage in Richtung des Kameraobjektivs geführt und dort über eine Sprühdüse auf das Objektiv gesprüht wird.

Aus der DE 10 2014 202 072 A1 ist ebenfalls eine Vorrichtung zur Reinigung einer optischen Linse bekannt, aufweisend einen inneren Ringkörper und einen zumindest teilweise innerhalb einer ringförmige Aufnahme angeordneten äußeren Ringkörper, wobei zwischen den Ringkörpern eine Fluidkammer angeordnet ist

Nachteilig bei den bekannten Reinigungssystemen ist jedoch die Tatsache, dass diese entweder nur eine Sprühdüse umfassen, was zu einer geringen Effizienz betreffend die Verteilung des jeweils verwendeten Reinigungsmittels führt, oder aber mehrere Sprühdüsen umfassen, was dazu führt, dass für jede Sprühdüse eine eigene Zuleitung und Fördereinrichtung für das Reinigungsmittel bereitgestellt werden müssen. Ein weiterer Nachteil ist die Tatsache, dass sich die Sprühdüsen in der Regel neben bzw. oberhalb des Objektivs der Kamera befinden, was zu einer Einschränkung des Sichtfelds der Kamera in diesem Bereich führt.

Vor diesem Hintergrund liegt der Erfindung die Aufgabe zugrunde, eine verbesserte Reinigungsvorrichtung zum Reinigen einer transparenten Abdeckung einer Kamera bereitzustellen, die die genannten Nachteile überwindet.

Diese Aufgabe wird durch die Merkmale der unabhängigen Ansprüche gelöst. Weiterbildungen der Erfindung ergeben sich aus den Unteransprüchen und der nachfolgenden Beschreibung.

Die erfindungsgemäße Reinigungsvorrichtung dient zum Reinigen einer transparenten Abdeckung einer Kamera. Bei der transparenten Abdeckung kann es sich beispielweise um eine Linse eines Objektivs der Kamera handeln, oder beispielsweise um ein Abdeckglas, hinter dem die Kamera angeordnet ist. Bei der Kamera kann es sich beispielsweise um eine Kamera handeln, die Bestandteil eines Fahrerassistenzsystems eines Fahrzeugs ist, und die im Außenbereich am Fahrzeug angeordnet und damit unterschiedlichen Witterungsbedingungen und einem hohen Verschmutzungspotenzial ausgesetzt ist.

Die erfindungsgemäße Reinigungsvorrichtung umfasst dabei wenigstens einen Reinigungsmittelzulauf, beispielweise einen Schlauch oder eine rohrförmigen Kanal, an dem vorzugsweise ein Fördersystem für das jeweils verwendete Reinigungsmittel angeordnet werden kann. Als Reinigungsmittel eigenen sich insbesondere flüssige und/oder gasförmige Reinigungsmittel.

Die erfindungsgemäße Reinigungsvorrichtung umfasst weiterhin wenigstens zwei Reinigungsmittelsprühelemente, die in einem Reinigungsmittelsprühabschnitt angeordnet sind, der vorzugsweise direkt an den Reinigungsmittelzulauf anschließt bzw. mit diesem verbunden ist. Die Reinigungsmittelsprühelemente dienen dazu, das jeweils verwendete Reinigungsmittel auf der zu reinigenden Abdeckung zu verteilen, d.h. in Richtung bzw. gezielt auf die zu reinigende transparente Abdeckung zu leiten. Hierzu eigenen sich beispielsweise Reinigungsdüsen oder Deflektoren als Reinigungsmittelsprühelemente.

Erfindungsgemäß umfasst die Reinigungsvorrichtung wenigstens einen Ringkanal im Bereich des Reinigungsmittelsprühabschnitts. Der Ringkanal ist dabei bevorzugt direkt mit dem Reinigungsmittelzulauf verbunden bzw. schließt direkt an diesen an. Weiterhin sind die wenigstens zwei Reinigungsmittelsprühelemente vorzugsweise direkt an dem Ringkanal angeordnet. Der Ringkanal ist vorzugsweise konzentrisch ausgebildet sowie derart, dass die zu reinigende Abdeckung der Kamera innerhalb des Ringkanals angeordnet werden kann, und dass dieser die zu reinigende Abdeckung ringförmig umgibt. Der Ringkanal dient dabei zur Verteilung des unter Druck aus dem Reinigungsmittelzulauf in den Ringkanal geförderten Reinigungsmittels zu den Reinigungsmittelsprühelementen.

Erfindungsgemäß können die Reinigungsmittelsprühelemente oberhalb des Ringkanals ausgebildet sein, wobei es sich bei den Reinigungsmittelsprühelementen um Deflektoren handeln können, die auf Bohrungen im Ringkanal angeordnet sind, welche die Austrittsöffnungen für das jeweils verwendete Reinigungsmittel darstellen.

Erfindungsgemäß kann der Ringkanal zweiteilig ausgebildet sein, mit einem Ringkanaldeckel an dem die Reinigungssprühelemente angeordnet bzw. ausgebildet sind.

Ein wesentlicher Vorteil der Erfindung besteht darin, dass durch die Verwendung des Ringkanals keine eigenen Zuleitungen für jedes Reinigungsmittelsprühelement benötigt werden.

Mit der vorliegenden Erfindung wird so eine kompakte und effektive Reinigungsvorrichtung geschaffen. Die Reinigungswirkung wird dabei durch ein System mehrerer Einflussfaktoren bestimmt. Dieses System besteht aus der Anzahl der Deflektoren, dem Wasserdruck, der Wassermenge, der Sprühdauer und der Anzahl der Wiederholungen. Die einzelnen Parameter dieses Systems lassen sich mit der Erfindung individuell auf die Kamera und die Anwendung einstellen. Somit kann sowohl die Reinigungswirkung als auch die benötigte Wassermenge optimiert werden.

Die Deflektoren sind in der Anzahl und Position variabel, insbesondere bei zweiteiliger Ausgestaltung des Ringkanals, mit einem Ringkanaldeckel an dem die Reinigungsmittelsprühelemente angeordnet bzw. ausgebildet sind. Die Kameras benötigen in unterschiedlichen Einbausituationen verschiedene freie Sichtfelder ohne Blind Spots. Dies kann durch die Verschiebung der Deflektoren auf dem Ringkanal dargestellt werden. Somit ist bei einem Einbau in den Seitenspiegel eines Fahrzeugs eine rotationssymmetrische Anordnung möglich, welche bei einem Einbau in der Heckklappe das Sichtfeld einschränken würde. Der Ringkanal kann in der Achse der Linse durch eine Erhöhung der Deflektoren nach unten versetzt werden, womit die optische Beeinträchtigung des Fahrzeugdesigns auf ein Minimum reduziert wird. Desweiteren wird mit dieser Erfindung eine kompakte Einheit erreicht, welche einen Einbau in beengten Bereichen wie Außenspiegel oder Grifftaster an der Heckklappe erlauben.

Die Erfindung betrifft weiterhin eine optische Erfassungsvorrichtung, zur Anordnung in einem Fahrzeug, umfassend eine Kamera, die mit einer Reinigungsvorrichtung nach einem der vorangehend beschriebenen Ausgestaltungen ausgebildet ist, sowie ein Fahrzeug eine entsprechende optische Erfassungsvorrichtung oder die erfindungsgemäße Reinigungsvorrichtung angeordnet ist.

Die vorliegende Erfindung wird nachfolgend anhand der in den Figuren schematisch dargestellten Ausführungsbeispiele näher erläutert.
- Fig. 1: zeigt ein erstes Ausführungsbeispiel der erfindungsgemäßen Reinigungsvorrichtung.
- Fig. 2: zeigt die Reinigungsvorrichtung aus Fig. 1 zusammen mit einer Kamera, die in der Reinigungsvorrichtung angeordnet werden kann.
- Fig. 3: zeigt die Reinigungsvorrichtung aus Fig. 1 als Explosionsdarstellung.
- Fig. 4: zeigt die Reinigungsvorrichtung aus Fig. 1 als Schnittdarstellung.
- Fig. 5: zeigt den Ringkanaldeckel der Reinigungsvorrichtung aus Fig. 1 aus zwei unterschiedlichen Perspektiven.
- Fig. 6: ist eine Schnittdarstellung einer nicht erfindungsgemäßen Reinigungsvorrichtung, insbesondere eine Detaildarstellung eines hochgezogenen Ringkanals mit innenliegenden Sprühöffnungen.

In allen Figuren sind gleiche bzw. funktionsgleiche Elemente und Vorrichtungen - sofern nichts Anderes angegeben ist - mit denselben Bezugszeichen versehen worden.

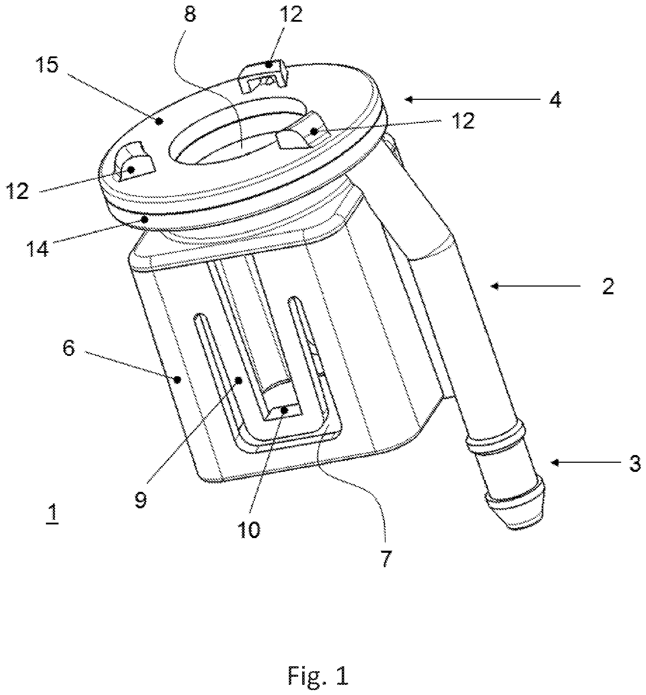

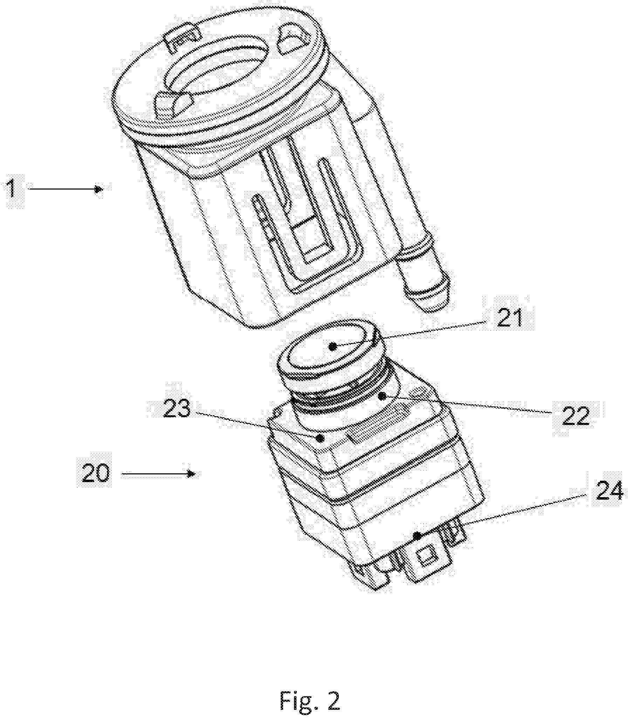

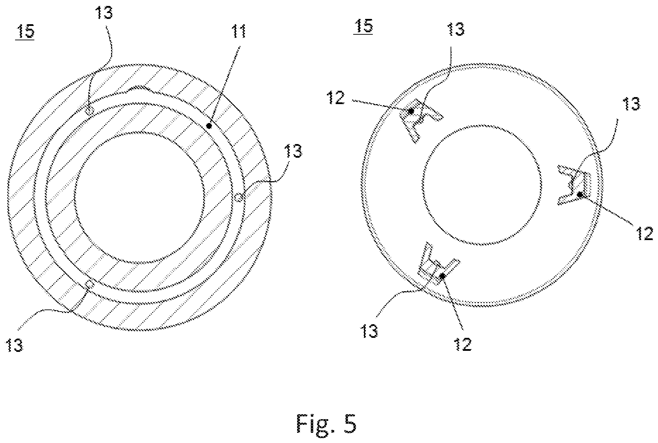

In den Figuren 1 bis 5 ist ein Ausführungsbeispiel der erfindungsgemäßen Reinigungsvorrichtung 1 zum Reinigen einer transparenten Abdeckung 21 einer Kamera 20 für ein Fahrzeug gezeigt. Bei der optisch transparenten Abdeckung 21 handelt es sich im gezeigten Ausführungsbeispiel dabei um eine Linse der Kamera 20.

Die Reinigungsvorrichtung 1 weist einen Reinigungsmittelzulauf 2 auf, durch den verschiedene Reinigungsmittel, beispielweise eine Reinigungsflüssigkeit, Druckluft oder ein Gemisch aus Reinigungsflüssigkeit und Druckluft, in Richtung eines Reinigungsmittelsprühabschnitts 4, in dem sich vorzugsweise die zu reinigende transparente Abdeckung 21 befindet, förderbar ist.

Der Reinigungsmittelzulauf 2 ist im gezeigten Ausführungsbeispiel als rohrförmiger Kanal ausgestaltet, an dessen einen Ende, insbesondere an dessen Einlass, ein Anschlussstutzen 3 ausgebildet ist. An dem Anschlussstutzen 3 kann so, insbesondere über einen Schlauch, beispielweise eine Pumpe als Fördereinrichtung angeschlossen werden, die bei Aktivierung das jeweilige Reinigungsmittel durch den Reinigungsmittelzulauf 2 in Richtung des Reinigungsmittelsprühabschnitts 4 pumpt.

Die dargestellte Reinigungsvorrichtung 1 ist weiterhin mit einer Aufnahme 6 ausgestaltet, an welcher der Reinigungsmittelzulauf 2 mit Anschlussstutzen 3 und der Reinigungsmittelsprühabschnitt 4 angeordnet bzw. ausgebildet sind. Die Aufnahme 6 ist dabei in Form eines Gehäuses ausgebildet, welches einen Innenraum einschließt, der als hülsenartige Aufnahme 6 für die Kamera 20 dient. Die Aufnahme 6 ist hierzu bevorzugt derart ausgestaltet, dass die Kamera 20 im Wesentlichen formschlüssig in das Innere der Aufnahme 6 eingeführt und darin positioniert werden kann. Hierzu können die Innenraumabmessung der Aufnahme 6 und die äußeren Abmessungen des Gehäuses der Kamera 20 unter Berücksichtigung von Toleranzen, entsprechend aufeinander abgestimmt sein.

Die Einschuböffnung 7, durch welche die Kamera 20 in die Aufnahme 6 der Reinigungsvorrichtung 1 eingeführt wird, befindet sich im dargestellten Ausführungsbeispiel auf der dem Sprühabschnitt 4 gegenüberliegenden Seite der Reinigungsvorrichtung 1. Die Kamera 20 kann somit mit ihrem Objektiv 22 voran in die Aufnahme 6 eingeschoben und derart positioniert werden, so dass sich die äußere Linse des Objektivs 22, und damit die zu reinigende transparente Abdeckung 21, im Reinigungsmittelsprühabschnitt 4 befindet. Im dargestellten Ausführungsbeispiel umfasst der Reinigungsmittelsprühabschnitt 4 hierzu eine Öffnung 8 zum Inneren der Aufnahme 6, welche der Einschuböffnung 7 gegenüberliegt. Die Größe und Form der Öffnung 8 kann dabei der Größe und Form der zu reinigenden transparenten Abdeckung 21 der Kamera 20 angepasst sein, in diesem Fall an die Größe des Objektivs 22 der Kamera 20.

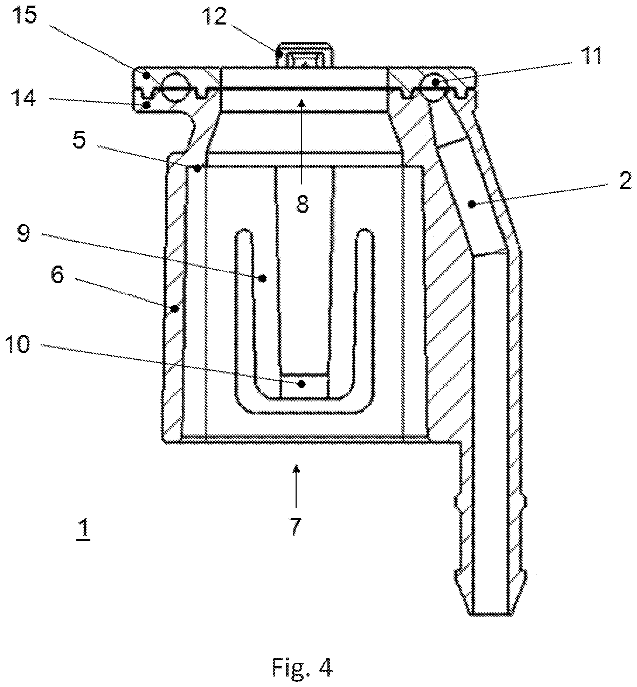

Die Aufnahme 6 ist, wie in Fig. 4 näher gezeigt, im Inneren im Bereich des Reinigungsmittelsprühabschnitts 4, d.h. auf der der Einschuböffnung 7 gegenüberliegenden Seite, mit einem Anschlag 5 ausgebildet, gegen welchen die Kamera 20, insbesondere das Gehäuse bzw. eine Kante 23 des Gehäuses der Kamera 20, beim Einführen in die Aufnahme 6 positioniert wird. Der Anschlag 5 ist dabei derart angeordnet, dass durch diesen eine definierte Positionierung der zu reinigenden transparenten Abdeckung 21 im Reinigungsmittelsprühabschnitt 4 bzw. in der Öffnung 8 des Reinigungsmittelsprühabschnitts 4 erreicht wird.

Im dargestellten Ausführungsbeispiel sind weiterhin Befestigungsmittel an der Aufnahme 6 der Reinigungsvorrichtung 1 ausgebildet, mittels welcher eine lösbare Anordnung der Kamera 20 in der Aufnahme 6 ermöglicht wird. Gemäß den Figuren handelt es sich hierbei um einen Rastmechanismus. Hierzu ist am Gehäuse der Reinigungsvorrichtung 1 eine U-förmige Biegelasche 9 mit einer Rastnase 10 ausgebildet. Diese federnde Biegelasche 9 wird beim Einführen der Kamera 20 in die Aufnahme 6 so lange vom Gehäuse der Kamera 20 nach außen gebogen, bis die Rastnase 10 in eine dafür vorgesehene Rastfalle, in diesem Fall eine Kante 24 am Gehäuse der Kamera 20, greift. Dies erfolgt vorzugsweise in dem Moment, wenn die Kamera 20 im vorderen Bereich der Aufnahme 6 gegen den Anschlag 5 positioniert wird. Der Rastmechanismus kann dabei insbesondere derart ausgebildet sein, dass durch diesen die Kamerapositionierung gegen den Anschlag 5 unter einer Spannung gehalten wird.

Im Reinigungsmittelsprühabschnitt 4 der Reinigungsvorrichtung 1 ist diese mit einem Ringkanal 11 ausgestaltet. Der Ringkanal 11 ist vorzugsweise konzentrisch ausgebildet und direkt mit dem Reinigungsmittelzulauf 2 verbunden, so dass das jeweilige Reinigungsmittel vom Reinigungsmittelzulauf 2 direkt in den Ringkanal 11 geleitet und dort verteilt wird. Der Ringkanal 11 umgibt dabei die Öffnung 8 des Reinigungsmittelsprühabschnitts 4.

An dem Ringkanal 11 sind weiterhin mehrere Reinigungsmittelsprühelemente angeordnet. Bei dem in Fig. 1 bis 5 gezeigten Ausführungsbeispiel handelt es sich bei den Reinigungsmittelsprühelementen um insgesamt drei Deflektoren 12. Die Deflektoren 12 sind dabei oberhalb von Bohrungen 13 im ansonsten, d.h. bis auf die Bohrungen 13 und den Anschluss an den Reinigungsmittelzulauf 2, geschlossenen Ringkanal 11 angeordnet. Die Deflektoren 12 dienen dazu, das unter Druck über die Bohrungen 13 aus dem Ringkanal 11 austretende Reinigungsmittel in Richtung der Öffnung 8 des Reinigungsmittelsprühabschnitts 4 umzulenken, insbesondere in Richtung des Kreismittelpunkts des Ringkanals 11.

Die Position und die Anzahl der Deflektoren 12 am Ringkanal 11 kann dabei an die jeweilige Einbausituation von Kamera 20 und Reinigungsvorrichtung 1 am Fahrzeug angepasst werden. Weiterhin kann die Anzahl und die Position auch in Abhängigkeit des von der Kamera 20 zu erfassenden Sichtfeldes abhängig gemacht werden. Bei sogenannten Surround View Kamerasystemen kommen beispielsweise sogenannte Fischaugen-Optiken ("fish eye lens") zum Einsatz, die der Kamera 20 ein Sichtfeld bzw. einen Erfassungswinkel von über 180° verleihen. Insbesondere bei derartigen Kamerasystemen können sich die Deflektoren 12 somit im Sichtfeld der Kamera 20 befinden, und dadurch die Bilderfassung in diesen Bereichen einschränken. Durch eine angepasste bzw. flexible Verteilung der Deflektoren 12 ist es möglich, diese Sichtfeldeinschränkung auf Bereiche des Sichtfelds zu verlagern, die weniger relevant sind.

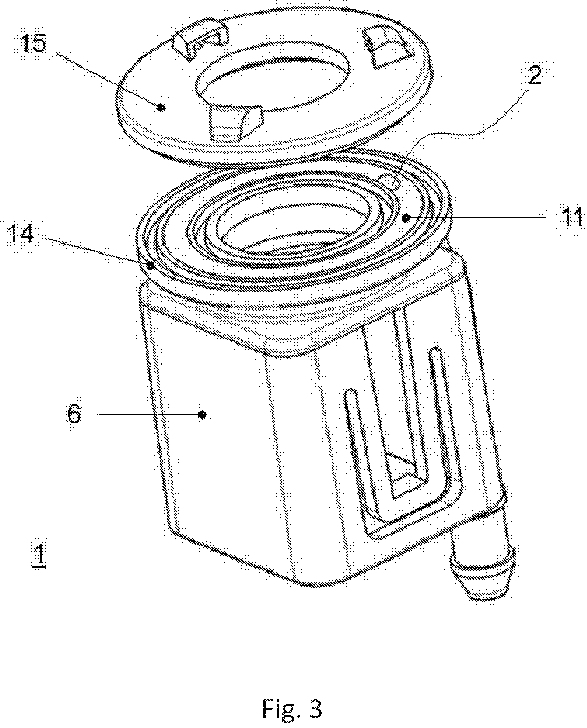

Für eine flexible bzw. angepasste Verteilung der Deflektoren 12 ist es insbesondere vorteilhaft, wenn der Ringkanal 11, wie in den Figuren 3, 4 und 5 näher dargestellt, als wenigstens zweiteiliger Gehäusekörper ausgebildet ist. Im gezeigten Beispiel wird der Ringkanal 11 dabei aus einer unteren Hälfte 14 gebildet, die direkt an der Aufnahme 6 der Reinigungsvorrichtung 1 ausgebildet und an der vorzugsweise der Reinigungsmittelzulauf 2 direkt angebunden ist, sowie aus einer oberen Hälfte, die als Ringkanaldeckel 15 ausgebildet ist. Der Ringkanaldeckel 15 umfasst dabei die über Bohrungen 13 im Ringkanal 11 angeordneten Deflektoren 12 und kann je nach Werkstoffart mit der unteren Hälfte 14 des Ringkanals 11 beispielweise verschweißt, verklipst oder verklebt werden. Auf diese Weise, insbesondere durch die beschriebene Ausgestaltung des Ringkanals 11 mit separatem Ringkanaldeckel 15, kann die Position und die Anzahl der Deflektoren 12 auf einfache Weise verändert, und damit die gesamte Reinigungsvorrichtung 1 sehr leicht an unterschiedliche Anforderungen angepasst werden, nämlich bevorzugt durch Austausch bzw. durch Verwendung eines an die jeweiligen Anforderungen angepassten Ringkanaldeckels 15, bei ansonsten unveränderter Reinigungsvorrichtung 1.

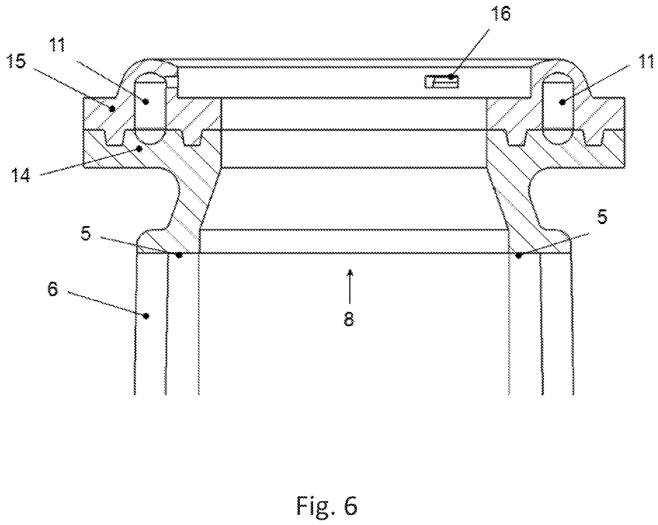

Gemäß einer nicht erfindungsgemäßen der Reinigungsvorrichtung 1 sind die Reinigungsmittelsprühelemente, anstelle der oberhalb des Ringkanals 11 angeordneten Deflektoren 12, auch in Richtung des Zentrums des Ringkanals 11 angeordnet. Diese Ausgestaltung ist exemplarisch in Fig. 6 dargestellt. Bei den Reinigungsmittelsprühelementen handelt es sich dabei um Sprühöffnungen 16 im Ringkanal 11, die derart ausgebildet sind, dass diese als Sprühdüsen für das unter Druck im Ringkanal 11 befindliche Reinigungsmittel fungieren und dieses in Richtung der Zentrums des Ringkanals 11 leiten, d.h. in Richtung der Position der zu reinigenden transparenten Abdeckung 21. Gemäß Fig. 6 kann der Ringkanal 11 hierzu konstruktiv nach oben gezogen sein, d.h. insbesondere erhöht sein gegenüber der Ausgestaltung mit Deflektoren12, damit sich die Sprühöffnungen 16 weiterhin auf Höhe der zu reinigenden Abdeckung 21 befinden.

Die erfindungsgemäße Reinigungsvorrichtung 1 kann beispielsweise mittels Spritzguss aus einem metallischen Werkstoff oder aus Kunststoff gefertigt sein. Die Reinigungsvorrichtung ist dabei bevorzugt einteilig gefertigt, d.h. als einteiliges Spritzgusswerkstück, wobei gemäß einer vorteilhaften Ausgestaltung der Erfindung, der Ringkanal auch als zusätzliches bzw. separates Werkstück gefertigt sein kann.

Obwohl die vorliegende Erfindung anhand bevorzugter Ausführungsbeispiele vorstehend beschrieben wurde, ist sie darauf nicht beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

Ergänzend sei darauf hingewiesen, dass "umfassend" und "aufweisend" keine anderen Elemente oder Schritte ausschließt und "eine" oder "ein" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen zu sehen.

## Patentansprüche

1. Reinigungsvorrichtung (1) zum Reinigen einer transparenten Abdeckung (21) einer Kamera (20), insbesondere einer Linse der Kamera (20), umfassend
- wenigstens einen Reinigungsmittelzulauf (2) und
- mindestens zwei Reinigungsmittelsprühelemente , wobei
die Reinigungsvorrichtung (1) wenigstens einen Ringkanal (11) umfasst, der mit dem Reinigungsmittelzulauf (2) verbunden ist und an dem die Reinigungsmittelsprühelemente angeordnet sind,
**dadurch gekennzeichnet, dass**
es sich bei den Reinigungsmittelsprühelementen um Deflektoren (12) handelt, die oberhalb des Ringkanals ausgebildet sind und die auf Bohrungen (13) im Ringkanal (11) angeordnet sind und/oder
dass der Ringkanal (11) zweiteilig ausgebildet ist, mit einem Ringkanaldeckel (16) an dem die Reinigungssprühelemente angeordnet bzw. ausgebildet sind.

2. Optische Erfassungsvorrichtung zur Anordnung in einem Fahrzeug, umfassend eine Kamera (20), die mit einer Reinigungsvorrichtung (1) nach dem vorangegangenen Anspruch ausgebildet ist.

3. Fahrzeug in dem eine Reinigungsvorrichtung (1) nach Anspruch 1 oder eine optische Erfassungsvorrichtung nach Anspruch 2 angeordnet ist.

## Claims

1. A cleaning device (1) for cleaning a transparent cover (21) of a camera (20), in particular a lens of said camera (20), comprising
- at least one cleaning agent inlet (2) and
- at least two cleaning agent spraying elements, wherein the cleaning agent (1) comprises at least one annular duct (11) which is connected to the cleaning agent inlet (2) and at which the cleaning agent spraying elements are arranged,
**characterized in that**
the cleaning agent spraying elements are deflectors (12) which are formed above the annular duct and which are arranged on boreholes (13) in the annular duct (11)
and/or
**in that** the annular duct (11) is formed in two parts with an annular channel lid (16) at which the cleaning agent spraying elements are arranged or formed.

2. An optical detection device to be arranged in a vehicle, comprising a camera (20) which is formed with a cleaning device (1) according to the preceding claim.

3. A vehicle in which a cleaning device (1) according to Claim 1 or an optical detection device according to Claim 2 is arranged.

## Revendications

1. Dispositif de nettoyage (1) destiné à nettoyer un cache transparent (21) d'une caméra (20), en particulier une lentille de la caméra (20), comprenant :
- au moins une conduite d'arrivée de produit nettoyant (2) et
- au minimum deux éléments de pulvérisation de produit nettoyant, le dispositif de nettoyage (1) comprenant au moins un canal annulaire (11) qui est relié à la conduite d'arrivée de produit nettoyant (2) et est disposé au niveau des éléments de pulvérisation de produit nettoyant,
**caractérisé en ce que**
les éléments de pulvérisation de produit nettoyant sont des déflecteurs (12) qui sont configurés au-dessus du canal annulaire et sont disposés sur les alésages (13) dans le canal annulaire (11) et/ou
**en ce que** le canal annulaire (11) est configuré en deux parties, avec un couvercle de canal annulaire (16) au niveau duquel les éléments de pulvérisation de nettoyage sont disposés ou configurés.

2. Appareil de détection optique destiné à être agencé dans un véhicule, comprenant une caméra (20), qui est configurée avec un dispositif de nettoyage (1) selon la revendication précédente.

3. Véhicule dans lequel un dispositif de nettoyage (1) selon la revendication 1 ou un appareil de détection optique selon la revendication 2 est disposé.
